# EUROPÄISCHE PATENTSCHRIFT

(11) **EP 2 312 930 B1**
(45) Veröffentlichungstag und Bekanntmachung des Hinweises auf die Patenterteilung: **03.10.2012**
(21) Anmeldenummer: 09775977.3
(22) Anmeldetag: 20.07.2009
(51) Int. Cl.: A01G 27/00

(54) **VORRICHTUNG ZUR AUFNAHME, ZUM SPEICHERN UND ZUR SELBSTREGULIERENDEN ABGABE VON FLÜSSIGKEIT AN EIN BEDARFSGEFÄSS**
DEVICE FOR HOUSING, STORING AND SELF-REGULATING RELEASE OF LIQUID TO A USER VESSEL
DISPOSITIF DE RÉCEPTION, DE STOCKAGE ET DE DISTRIBUTION AUTORÉGULÉE DE LIQUIDE VERS UN CONTENANT D'UTILISATION DU LIQUIDE

(30) Priorität: 21.07.2008 DE 102008034118
(43) Veröffentlichungstag der Anmeldung: 27.04.2011
(73) Patentinhaber: Naumann, Frank, 04626 Vollmershain (DE)
(72) Erfinder: Naumann, Frank, 04626 Vollmershain (DE)
(74) Vertreter: Auerbach, Bettina
(86) Internationale Anmeldenummer: PCT/DE2009/000995
(87) Internationale Veröffentlichungsnummer: WO 2010/009706

(56) Entgegenhaltungen:
- WO-A1-2008/049511
- DE-U1-202007 000 495
- FR-A1- 2 701 352
- FR-A2- 2 646 751
- GB-A- 2 218 609

## Beschreibung

Die Erfindung betrifft eine Vorrichtung zur Aufnahme, zum Speichern und zur selbstregulierenden Abgabe von Flüssigkeit an ein Bedarfsgefäß, wobei diese es ermöglicht, jegliche Art von geschlossenen Gefäßen mit einem flüssigen Medium zu Befüllen, dieses zu Speichern und je nach Bedarf ohne äußeres Zutun an ein Bedarfsgefäß abzugeben.

Vorrichtungen dieser Art werden beispielsweise für die Langzeitbewässerung von Pflanzen in Pflanzgefäßen oder für die Langzeitversorgung von Futtertränken benötigt.

Im bekannten Stand der Technik werden bereits einige Lösungen dokumentiert, welche sich ebenfalls mit der Flüssigkeitsbevorratung und einer verzögerten Abgabe dieser an ein Bedarfsgefäß beschäftigen. So zeigt bereits die DE 576145 PS eine Lösung für Blumentöpfe oder -kästen mit einem oberen Rand, welcher als Wasserrinne ausgebildet ist, wobei diese zum Blumentopfinneren mit Öffnungen versehen ist, durch welche das Wasser verzögert an das Innere des Topfes abgegeben werden kann. Nachteil dieser Lösung ist die geringe zeitliche Verzögerung der Abgabe und das geringe Speichervolumen, begrenzt durch die Rinnengröße. Außerdem wird immer nur der Randbereich des Topfinneren bevorzugt mit Wasser versorgt, was für die Wurzelballenversorgung von Pflanzen nicht ausreichend ist.

Eine weitere Lösung zur konstanten Wasserversorgung von Pflanzen in einem Pflanzgefäß wird in der DE 202007 000 495 U1 beschrieben. Hier weist ein Doppelwandbehälter einen Hohlraum als Wasservorratsraum auf, der über einen luftdicht verschließbaren Einfüllstutzen verfügt. Im unteren Bereich des Doppelwandbehälters ist zusätzlich ein wasserdurchlässiges Sieb angeordnet. Nachteil dieser Lösung ist, dass eine Überwässerung des Behälters durch Regen oder zusätzlichem Gießen nicht ausgeschlossen werden kann. Da der untere Bereich des Behälterbodens völlig offen gestaltet ist und der Druckausgleich der durch das Befüllen komprimierten Luft über das Pflanzgut (Erde, Granulat) erfolgt, kommt es zu einem raschen Eintritt des Wassers in das Pflanzgut, was zu einer Überwässerung führen kann.

Eine sehr weitreichende Lösung offenbart die GB 2 218 609 A. Es handelt sich um eine Vorrichtung zur Aufnahme, zum Speichern und zur selbstregulierenden Abgabe von Flüssigkeit an ein Bedarfsgefäß. Dabei ist das Speichergefäß im Bedarfsgefäß angeordnet und verfügt über eine bedarfsweise verschlussfähige Einfüllöffnung und eine Belüftungsöffnung und ist nur so von Außen zugänglich. Das ansonsten geschlossene Speichergefäß verfügt weiterhin über eine Auslauföffnung.

Nachteil dieser Lösung ist das Fehlen einer Regulation bei einem durch Regen oder Unachtsamkeit verursachten Wasserüberschuss. Dadurch kommt es zu einer Überwässerung der Pflanzen und zur Fäulnisbildung der Wurzeln.

Aufgabe der Erfindung ist es, die Nachteile des Standes der Technik zu überwinden und eine Lösung zu schaffen, mit deren Hilfe es möglich ist, eine kontinuierliche und gleichmäßige Langzeitversorgung mit Wasser oder einem Nährstoffwassergemisch für ein Bedarfsgefäß, wie Pflanzgefäße oder Futtertränken, zu ermöglichen ohne dass ein größerer Wartungs- und Betreibeaufwand erforderlich ist. Ein zu Viel an Wasser bei Pflanzgefäßen durch Regenwasser oder zusätzlichem Gießen soll unbedingt vermieden werden.

Erfindungsgemäß wird die Aufgabe durch die Merkmale des Anspruchs 1 gelöst. Die vorteilhaften Ausgestaltungen sind in den Unteransprüchen beschrieben.

Danach besteht die Vorrichtung zur Aufnahme, zum Speichern und zur selbstregulierenden Abgabe von Flüssigkeit an ein Bedarfsgefäß, aus einem in einem Bedarfsgefäß integrierten Speichergefäß für die erforderliche Flüssigkeit, wobei das Speichergefäß aus einem über wenigstens eine bedarfsweise verschlussfähige Einfüllöffnung von Außen zugänglichen und ansonsten geschlossenem Gefäß besteht, welches wenigstens eine Belüftungsöffnung und wenigstens eine Auslauföffnung aufweist und eine Einfüllöffnung mit einem bis annähernd zum Boden des Gefäßes ragenden Einfüllkanal formschlüssig in Kontakt ist und im geschlossenen Speichergefäß ein weiterer innerhalb des Speichergefäßes nach oben offener Luftkanal angeordnet ist. Dieser Luftkanal mündet im Seitenwandbereich des Gefäßes mit der Luftkanalöffnung im unteren Bereich. Die Anordnung dieser unteren Luftkanalöffnung des integrierten Luftkanals ist dabei im Bereich des Bedarfshöhenniveaus der Flüssigkeit im Bedarfsgefäß angeordnet. Desweiteren sind eine zum kontrollierten Entleeren des Speichergefäßes dienende Auslauföffnung ebenso wie die untere Luftkanalöffnung in der Gefäßwand des Speichergefäßes angeordnet., wobei die Auslauföffnung unterhalb des Höhenniveaus der Anordnung der unteren Luftkanalöffnung angeordnet ist und die Auslauföffnung zusätzlich mit einem kapillarfähigem Docht verschlossen ist.

Wird nun durch die im oberen Bereich des geschlossenen Behälters befindliche bedarfsweise verschlussfähige Einfüllöffnung eine Flüssigkeit in den Behälter eingefüllt, so füllt sich dieser und die in dem Behälter befindliche Luft wird durch den Luftkanal abgeleitet.

Es hat sich als vorteilhaft erwiesen wenn die Auslauföffnung des Einfüllkanals maximal auf gleichem Höhenniveau wie die untere Luftkanalöffnung, besser noch unterhalb dieses Höhenniveaus angeordnet ist. Dadurch kann keine Luft in den Einlaufkanal dringen.

Um einer Verschmutzung des Wasserversorgungssystems und damit einer Funktionsstörung vorzubeugen sind an der Einfüllkanalöffnung, der unteren Luftkanalöffnung und an der im Inneren des Bedarfsgefäßes angeordneten Öffnung des Überlaufs zusätzliche Filtervorrichtung (8) in Form von Sieben angeordnet.

Das Bedarfsgefäß ist als ein einseitig offenes Gefäß ausgebildet, um das für den Bedarf entsprechende Medium aufnehmen zu können. In diesem Fall wird das Speichergefäß in dem einseitig offenen Raum des Bedarfsgefäßes integriert. Es ist also möglich, nachträglich Speichergefäße in vorhandene Bedarfsgefäße, wie Pflanzgefäße, Pflanzschalen oder in Gefäße für die Nutzung als Tiertränke zu integrieren.

Es ist auch möglich, das Bedarfsgefäß so auszubilden, dass das Bedarfsgefäß ein einseitig offenes Gefäß und gleichzeitig ein von Außen zugängliches Gefäß für die Aufnahme von Flüssigkeit ist.

Hier bietet sich an, das das gesamte Bedarfsgefäß, auch der Bodenbereich, als Doppelwandgefäß ausgebildet ist, wobei der durch die Doppelwand gebildete Bereich als Speichergefäß genutzt wird und die Anordnung von Zufuhr-, Abführ- und Überlaufkanälen in diesem Bereich erfolgt.

Um ein Transport im Winter zum Schutz vor Frosteinwirkungen zu vermeiden, ist an der Außerwand des doppelwandigen Bedarfsgefäßes und dort im Bereich des Bodens eine wiederverschließbare Entleerungsöffnung angeordnet.

Mit derartig ausgebildeten Vorrichtungen besteht die Möglichkeit, ein Bedarfsgefäß nachhaltig und kontinuierlich mit Flüssigkeit zu versorgen, ohne dass es zu einer Überwässerung kommt, wobei eine praktische unkomplizierte Bedienung möglich ist. Es besteht auch die Möglichkeit, dass die Vorrichtung als Nachrüstvariante in vorhandene Bedarfsgefäße angeordnet wird, wenn diese als einseitig offene Gefäße ausgebildet sind.

Das Befüllen geht umso langsamer je voller das Speichergefäß wird, da die Luft in dem Speichergefäß durch den Anstieg des Wasserstandes komprimiert wird. Ist der Behälter voll, entweicht Flüssigkeit über den Einfüllkanal- Überlauf und ist somit ein Hinweis, den Vorgang zu beenden.

Während des Befüllens entweicht Flüssigkeit aus der unteren Einfüllkanalöffnung in das Speichergefäß. Dies hat zur Folge, dass im Speichergefäß die Flüssigkeit ansteigt und dadurch die untere Luftkanalöffnung verschlossen wird. Dieser Vorgang kann über den Querschnitt der Öffnung und/oder durch den zusätzlichen Einsatz von kapillarfähigen Dochten zeitlich geregelt werden. Durch den Füllstand des gefüllten Behälter ist der Luftkanal und der Einfüllkanal ebenso mit Flüssigkeit verschlossen. Somit kann keine Luft mehr in den Behälter gelangen.

Läuft nun noch weiterhin Flüssigkeit aus dem Speichergefäß in das Bedarfsgefäß, so entsteht Unterdruck, welcher das Entleeren des Behälters zum Stillstand bringt.

Wird nun im Bedarfsgefäß Flüssigkeit verbraucht, z.B. durch Pflanzen, Tiere, Verdunstung usw., so sinkt die Oberfläche der Flüssigkeit und gibt die untere Luftkanalöffnung wieder frei und Luft kann eindringen. Der dadurch entstehende Druckausgleich lässt die Flüssigkeit wieder nachlaufen bis die untere Luftkanalöffnung verschlossen ist.

Solange der Behälter mit Flüssigkeit gefüllt ist, wird sie immer auf die Höhe der unteren Luftkanalöffnung steigen.

Bei der Pflanzenzucht und Tierhaltung ist es allgemein üblich, dass die Versorgung direkt oder bei längerer Abwesenheit über ein Reservat an Flüssigkeit erfolgt.

Bisherige Lösungen waren entweder technisch und finanziell aufwendig oder verfügen nur über einen zeitlich begrenzten Spielraum.

Die aufgezeigte Lösung ist einfach und genial zugleich.

Wartung, Verschleiß, komplizierte Bedienung, Fehlfünktionen, Energie- und Wartungskosten usw. gehören der Vergangenheit an, da es sich um ein völlig autarkes System handelt.

Mit dieser Vorrichtung werden alle Probleme einer Langzeitversorgung auf einfache Weise gelöst. Das verwendetet Material aus dem die Vorrichtung gefertigt ist, deren Größe und Form sowie die dekorative Gestaltung können dabei den jeweiligen Einsatz angepasst werden.

Überall da, wo Pflanzen oder Tiere über längere Zeit mit Flüssigkeit versorgt werden müssen, kann diese Vorrichtung zum Einsatz kommen.

Bei Pflanzgefäße, wie Blumentöpfen, Blumenkästen, Pflanzsteinen und Kübeln, Beet- und Grabeinfassungen usw. und Tiertränken, welche über eine solche

Vorrichtung verfügen, kann bei längerer Abwesenheit z.B. Urlaub das Problem der ausreichenden und langzeitigen Versorgung mit Wasser mit Hilfe der erfindungsgemäßen Vorrichtung gelöst werden.

Die Vorrichtung soll nachstehend an einem Ausführungsbeispiel näher erläutert werden.

In der beigefügten Zeichnung zeigen:
- Fig. 1: einen schematischen Längsschnitt durch eine erfindungsgemäße Vorrichtung mit mittiger Anordnung des Flüssigkeitsreservoirs;
- Fig. 2: schematische Ansicht eines Querschnitts bei einem Doppelwandgefäß und der Gestaltung des Flüssigkeitsreservoirs;

### Ausführungsbeispiel 1:

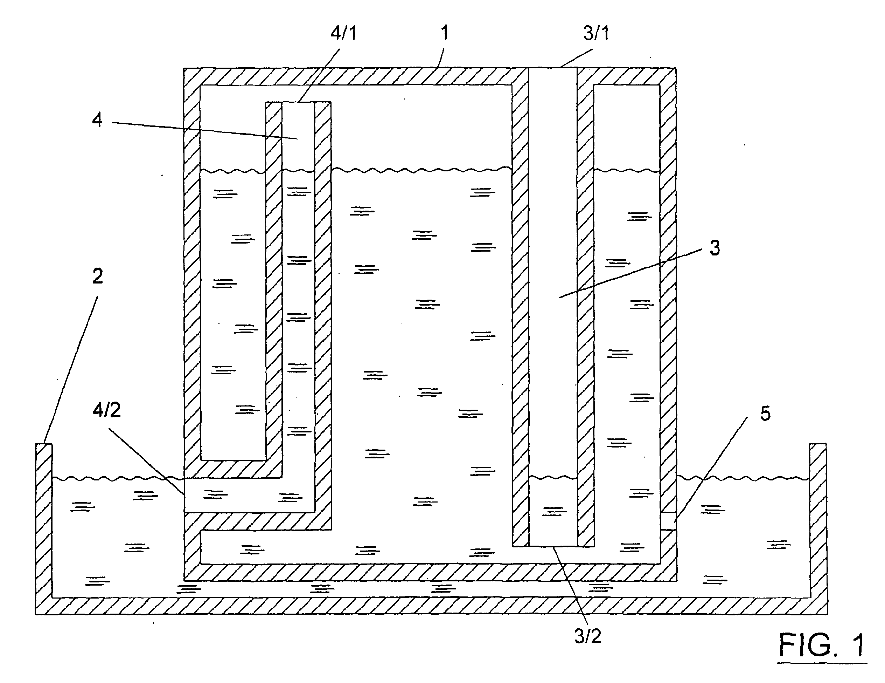

Gemäß der Figuren 1 ist in einem vorhandenen einseitig offenen Bedarfsgefäß 2 ein Speichergefäß 1 als Flüssigkeitsreservoir nachträglich angeordnet. Das Speichegefäß 1 ist als geschlossener Behälter ausgebildet, welcher über eine obere Einfüllkanalöffnung 3/1, eine Auslauföffnung 5 und eine untere Luftkanalöffnung 4/2 von außen zugänglich gestaltet ist. Der Luftkanal 4 und der Einfüllkanal 3 sind im Inneren des Speichergefäßes 1 angeordnet. Der Einfüllkanal 3 ist dabei im Speichergefäß 1 im Abstand von dessen Boden nach unter offen gestaltet, wobei die Öffnung unterhalb des Höhenniveaus der unteren Luftkanalöffnung 4/2 angeordnet ist. Der Luftkanal 4 ist innerhalb des geschlossenen Speichergefäßes 1 nach oben offen ausgebildet.

Während des Befüllens läuft Flüssigkeit und/oder Nährlösung 10 zunächst aus der unteren Einfüllkanalöffnung 3/2 in das Speichergefäß 1.

Dadurch füllt sich allmählich das Speichergefäß 1 mit Flüssigkeit und/oder Nährlösung 10.

Bei Erreichen des Höhenniveaus der in der Außenwand des Speichergefäßes 1 angeordneten Auslauföffnung 5, welche sich oberhalb des Höhenniveaus der Anordnung der unteren Einfüllkanalöffnung 3/2 befindet, tritt das Wasser 10 in das Bedarfsgefäß 2 aus und füllt dieses bis zum Erreichen des Verschlusses des ebenfalls in der Außenwand der Speichergefäßes 1 befindlichen unteren Luftkanalöffnung 4/2. Danach steigt das Wasser 10 allmählich im Speichergefäß 1 weiter an. Durch die dadurch im Speichergefäß 1 stattfindende Kompression der dort befindlichen Luft, kann das Wasser 10 nicht in den Luftkanal 4 eindringen und es kommt zum Einstellen des Verhältnisses Wasserstandes /Luftdruck. Sinkt nunmehr der Wasserstand im Bedarfsgefäß 2, kann Luft in die untere Luftkanalöffnung 4/2 eindringen, der Luftdruck verringert sich und es wird auf Grund der bestehenden Wassersäule über die Auslauföffnung 5 Wasser in das Bedarfsgefäß 2 gedrückt.

Läuft nun noch weiterhin Flüssigkeit 10 aus dem Speichergefäß 1, so wird die untere Luftkanalöffnung 4/2 wieder verschlossen und es entsteht ein LuftUnterdruck, welcher das Entleeren des Behälters zum Stillstand bringt.

Mit dieser Lösung besteht die Möglichkeit des Nachrüstens von bestehenden Bedarfsgefäßen mit einem Speichergefäß 1 für Flüssigkeiten zur kontinuierlichen und langanhaltenden Versorgung des Bedarfsgefäßes 2 mit der entsprechenden Flüssigkeit.

Da, wo Pflanzen oder Tiere über längere Zeit mit Flüssigkeit versorgt werden müssen und bereits entsprechende Flüssigkeitsgefäße vorhanden sind, kann diese Vorrichtung zum Einsatz kommen.

### Ausführungsbeispiel 2:

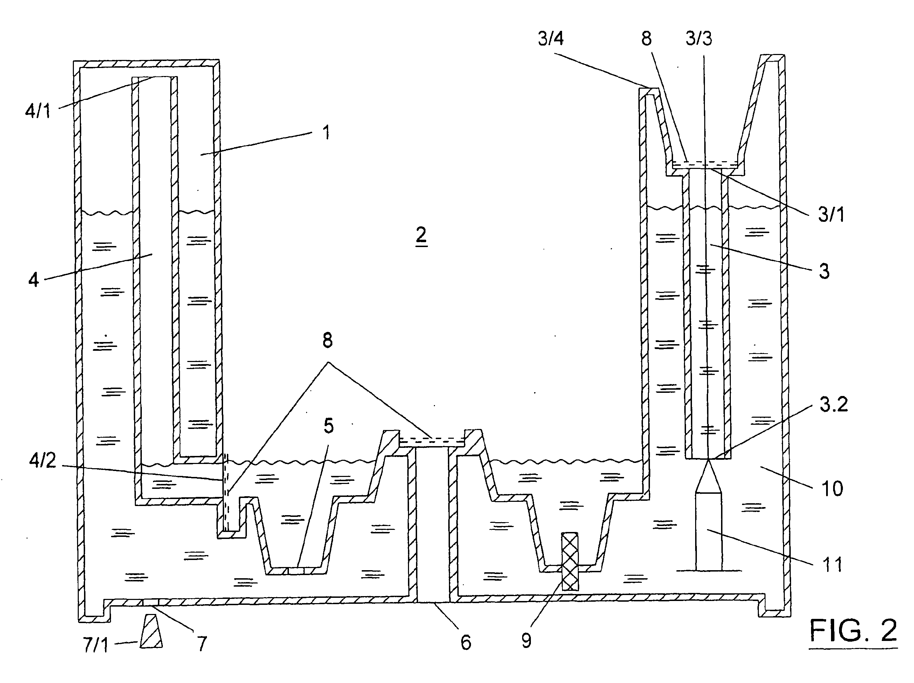

Gemäß der Figur 2 ist das Speichergefäß 1 und das Bedarfsgefäß 2 in einem einzigen Gefäß zusammengefasst. Dabei ist das Bedarfsgefäß 2 als Doppelwandgefäß ausgebildet und der durch die Doppelwand eingeschlossene Raum wird als Speichergefäß 1 genutzt. Dazu sind in diesen so gebildeten Speichergefäß 1 zum einen der Einfüllkanal 3 angeordnet. Dieser reicht vom oberen Rand des Bedarfsgefäßes 2 bis in den unteren Bereich, jedoch nicht höher als die Anordnung der unteren Luftkanalöffnung 4/2.

Im Bereich der oberen Einfüllkanalöffnung 3/1 ist eine trichterförmige Auswölbung des Gefäßrandes angeordnet, wobei die Innenkante des Trichters 3/3 niedriger ausgebildet ist, als die äußere Kante des Trichters 3/3 und übernimmt somit die Funktion des Überlaufs 3/4 des Einfülltrichters 3/3.

Dadurch wird gewährleistet, dass beim Überlauf, infolge des zu schnellen Befüllens das überflüssige Wasser in das Bedarfsgefäß 2 abläuft.

Desweiteren weist das Speichergefäß 1 einen Luftkanal 4 auf, wobei die obere Luftkanalöffnung 4/1 im Bereich unmittelbar unter dem oberen Rand des Doppelwandgefäßes, jedoch nach oben offen und höher als der Überlauf 3/4 des Einfülltrichters 3/3, geordnet ist.

Die untere Luftkanalöffnung 4/2 mündet im unteren Innenwandbereich des Doppelwandgefäßes und ist zum Bedarfsgefäßraum offen. Lediglich ein Filtersegment 8 in Form einer Siebscheibe ist im Mündungsbereich des Kanals 4 angeordnet. Dieser Mündungsbereich von 4/2 ist annähernd im gleichen Höhenniveau wie die Mündung der unteren Einfüllkanalöffnung 3/2 angeordnet. Diese Anordnung bestimmt den gewünschten niedrigsten Flüssigkeitsstand im Bedarfsgefäß 2 im funktionsfähigen befüllten Zustand des Speichergefäßes 1. Im Bodenbereich, jedoch oberhalb der Anordnung der unteren Luftkanalöffnung 4/2 und oberhalb der unteren Einfüllkanalöffnung 3/2 ist ein Überlauf 6 , ebenfalls mit einer Filtereinheit 8 in Form eines Siebes ausgerüstet, angeordnet. Diese Anordnung bestimmt den gewünschten höchstzulässigen Flüssigkeitsstand im Bedarfsgefäß 2 im funktionsfähigen befüllten Zustand des Speichergefäßes 1. Im Bedarfsgefäß sind im inneren Bodenbereich mehrere Auslauföffnungen 5 angeordnet, welche vorzugsweise in diesem Beispiel mit einem kapillarfähigen Docht 9 ausgestattet sind. Dadurch soll in unteren Bereich des Bedarfsgefäßes 2 einerseits eine für bestimmte Pflanzen nicht verträgliche Überwässerung im Wurzelbereich vermieden werden und im Falle des Sinkens der Wassersäule im Speichergefäß am Ende der Versorgungszeit dennoch eine Bewässerung der Wurzelbereiche aus dem untersten Bereich des Speichergefäßes 1 zur zusätzlichen Sicherheit ermöglicht werden.

Um eine völlige Überschreitung der Versorgungszeit des Bedarfsgefäßes 2 mit Flüssigkeit zu vermeiden, weist der Einfüllkanal 3 an der unteren Einfüllkanalöffnung 3/2 einen Schwimmer 11 auf, welche über eine von Außen sichtbare Anzeigeeinheit den bedenklichen Füllstand anzeigt.

Für das Entleeren, zum Beispiel bei Frostgefahr, weist die äußere Gefäßwand im Bodenbereich eine Entleerungsöffnung 7 auf, welche durch einen geeigneten Verschluss 7/1 geöffnet und wieder verschlossen werden kann.

Das Funktionsprinzip ist anlog dem im Beispiel 1 beschriebenen.

Wird eine solche Vorrichtung als Pflanzgefäße, wie Blumentopf, Blumenkasten, Pflanzsteinen oder Kübel angewendet, kann bei längerer Abwesenheit z.B. Urlaub das Problem der ausreichenden und langzeitigen Versorgung der Pflanzen mit Wasser gewährleistet werden.

### Bezugszeichenliste

- 1: Speichergefäß
- 2: Bedarfsgefäß
- 3: Einfüllkanal
- 3/1: obere Einfüllkanalöffnung
- 3/2: untere Einfüllkanalöffnung
- 3/3: Einfülltrichter
- 3/4: Überlauf Einfülltrichter
- 4: Luftkanal
- 4/1: obere Luftkanalöffnung
- 4/2: untere Luftkanalöffnung
- 5: Auslauföffnung
- 6: Überlauf
- 7: Entleerungsöffnung
- 7/1: Verschluss Entleeröffnung
- 8: Filter/Sieb
- 9: kapillarfähige Dochte
- 10: Wasser/Nährlösung
- 11: Schwimmer mit Anzeige

## Patentansprüche

1. Vorrichtung zur Aufnahme, zum Speichern und zur selbstregulierenden Abgabe von Flüssigkeit an ein Bedarfsgefäß, wobei ein Speichergefäß (1) in dem Bedarfsgefäß (2) angeordnet ist, das Speichergefäß (1) aus einem über wenigstens eine bedarfsweise verschlussfähige Einfüllöfnung (3/1), wenigstens eine Belüftungsöffnung (4/2) und wenigstens eine Auslauföffnung (5) von Außen zugänglichen und ansonsten geschlossenem Gefäß (1) besteht, ***dadurch gekennzeichnet, dass*** die Einfüllöffnung (3/1) mit einem bis annähernd zum Boden des Speichergefäßes (1) ragenden Einfüllkanal (3) formschlüssig in Kontakt ist, im geschlossenen Speichergefäß (1) ein weiterer innerhalb des Speichergefäßes (1) nach oben offener Luftkanal (4) angeordnet ist, dass dieser Luftkanal (4) im unteren Bereich der Seitenwand des Gefäßes (1) mit der Luftkanalöffnung (4/2) mündet und die Anordnung der Luftkanalöffnung (4/2) des Luftkanals (4) im Bereich des Bedarfshöhenniveaus der Flüssigkeit im Bedarfsgefäß (2) angeordnet ist, eine zum kontrollierten Entleeren des Speichergefäßes (1) dienende Auslauföffnung (5) ebenso wie die untere Luftkanalöffnung (4/2) in der Gefäßwand des Speichergefäßes (1) angeordnet sind, wobei die Auslauföffnung (5) unterhalb des Höhenniveaus der Anordnung der unteren Luftkanalöffnung (4/2) angeordnet ist und die Auslauföffnung (5) mit einem kapillarfähigem Docht verschlossen wird.

2. Vorrichtung zur Aufnahme, zum Speichern und zur selbstregulierenden Abgabe von Flüssigkeit an ein Bedarfsgefäß nach dem Anspruch 1, **dadurch gekennzeichnet, dass** die Auslauföffnung (5) maximal auf gleichem Höhenniveau wie die untere Luftkanalöffnung (4/2) angeordnet ist.

3. Vorrichtung zur Aufnahme, zum Speichern und zur selbstregulierenden Abgabe von Flüssigkeit an ein Bedarfsgefäß nach den Ansprüchen 1 bis 2, **dadurch gekennzeichnet, dass** an der Einfüllkanalöffnung (3/1), der unteren Luftkanalöffnung (4/2) und an der im Inneren des Bedarfsgefäßes (2) angeordneten Öffnung des Überlaufs (6) jeweils eine zusätzliche Filtervorrichtung (8) in Form eines Siebes angeordnet ist.

4. Vorrichtung zur Aufnahme, zum Speichern und zur selbstregulierenden Abgabe von Flüssigkeit an ein Bedarfsgefäß nach dem Anspruch 1, **dadurch gekennzeichnet, dass** das Bedarfsgefäß (2) ein einseitig offenes Gefäß für die Aufnahme von Einpflanzungen ist.

5. Vorrichtung zur Aufnahme, zum Speichern und zur selbstregulierenden Abgabe von Flüssigkeit an ein Bedarfsgefäß nach dem Anspruch 1, **dadurch gekennzeichnet, dass** das Bedarfsgefäß (2) ein einseitig offenes Gefäß und gleichzeitig ein von Außen zugängliches Gefäß für die Aufnahme von Flüssigkeit ist.

6. Vorrichtung zur Aufnahme, zum Speichern und zur selbstregulierenden Abgabe von Flüssigkeit an ein Bedarfsgefäß nach den Ansprüchen 1 bis 3, **dadurch gekennzeichnet, dass** das gesamte Bedarfsgefäß (2), auch der Bodenbereich, als Doppelwandgefäß ausgebildet ist, wobei der durch die Doppelwand gebildete Bereich als Speichergefäß (1) ausgebildet ist und die Anordnung der Kanäle (3, 4, 5 und 6) in diesem Bereich des Speichergefäßes (1) erfolgt.

7. Vorrichtung zur Aufnahme, zum Speichern und zur selbstregulierenden Abgabe von Flüssigkeit an ein Bedarfsgefäß nach den Ansprüchen 1 bis 3 und 6, **dadurch gekennzeichnet, dass** an der Außerwand des doppelwandigen Bedarfsgefäßes (2) und dort im Bodenbereich eine wiederverschließbare Entleerungsöffnung (7) angeordnet ist.

## Claims

1. Device for receiving, storing and self-regulating release of liquid to a user vessel, wherein a storage vessel (1) is arranged in the user vessel (2), and the storage vessel (1) comprises a vessel (1) which is accessible from the outside via at least one filling opening (3/1), which can be closed if need be, at least one ventilation opening (4/2) and at least one outlet opening (5), and which vessel (1) is otherwise closed, **characterized in that** the filling opening (3/1) is in form-fit contact with a filling duct (3) extending almost to the floor of the storage vessel (1), in the closed storage vessel (1) there is arranged a further air duct (4) which is open at the top within the storage vessel (1), **in that** this air duct (4) opens out in the lower area of the side wall of the vessel (1) via the air duct opening (4/2), and the arrangement of the air duct opening (4/2) of the air duct (4) is arranged in the area of the required level of the liquid in the user vessel (2), an outlet opening (5) for controlled emptying of the storage vessel (1) is arranged, like the lower air duct opening (4/2), in the vessel wall of the storage vessel (1), wherein the outlet opening (5) is arranged below the height at which the lower air duct opening (4/2) is arranged, and the outlet opening (5) is closed with a capillary wick.

2. Device according to Claim 1 for receiving, storing and self-regulating release of liquid to a user vessel, **characterized in that** the outlet opening (5) is at most arranged at the same height as the lower air duct opening (4/2).

3. Device according to Claims 1 to 2 for receiving, storing and self-regulating release of liquid to a user vessel, **characterized in that** an additional filter device (8) in the form of a sieve is arranged in each case at the filling duct opening (3/1), at the lower air duct opening (4/2) and at the opening of the overflow (6) arranged in the interior of the user vessel (2).

4. Device according to Claim 1 for receiving, storing and self-regulating release of liquid to a user vessel, **characterized in that** the user vessel (2) is a vessel open on one side for receiving plants.

5. Device according to Claim 1 for receiving, storing and self-regulating release of liquid to a user vessel, **characterized in that** the user vessel (2) is a vessel open on one side and is at the same time a vessel accessible from the outside for receiving liquid.

6. Device according to Claims 1 to 3 for receiving, storing and self-regulating release of liquid to a user vessel, **characterized in that** the entire user vessel (2), including the floor area, is designed as a double-walled vessel, wherein the area formed by the double wall is designed as storage vessel (1) and the ducts (3, 4, 5 and 6) are arranged in this area of the storage vessel (1).

7. Device according to Claims 1 to 3 and 6 for receiving, storing and self-regulating release of liquid to a user vessel, **characterized in that** a re-closable discharge opening (7) is arranged on the outer wall of the double-walled user vessel (2), specifically in the floor area.

## Revendications

1. Dispositif de réception, de stockage et de distribution autorégulée de liquide vers un contenant d'utilisation, dans lequel un réservoir de stockage (1) est disposé dans le contenant d'utilisation (2), le réservoir de stockage (1) se compose d'un réservoir (1) accessible de l'extérieur par au moins une ouverture de remplissage (3/1) pouvant au besoin être fermée, au moins une ouverture d'aération (4/2) et au moins une ouverture d'évacuation (5) et pour le reste fermé, **caractérisé en ce que** l'ouverture de remplissage (3/1) est en contact par complémentarité de forme avec un canal de remplissage (3) s'étendant jusqu'à proximité du fond du réservoir de stockage (1), un autre canal à air (4) ouvert vers le haut à l'intérieur du réservoir de stockage (1) est disposé dans le réservoir de stockage fermé (1), **en ce que** ce canal à air (4) débouche dans la région inférieure de la paroi latérale du réservoir (1) par l'ouverture de canal à air (4/2) et l'agencement de l'ouverture du canal à air (4/2) du canal à air (4) est disposé dans la région du niveau d'utilisation du liquide dans le contenant d'utilisation (2), une ouverture d'évacuation (5) servant pour la vidange contrôlée du réservoir de stockage (1) ainsi que l'ouverture inférieure (4/2) du canal à air sont disposées dans la paroi de réservoir du réservoir de stockage (1), dans lequel l'ouverture d'évacuation (5) est disposée en dessous du niveau de l'agencement de l'ouverture inférieure (4/2) du canal à air et l'ouverture d'évacuation (5) est fermée par une mèche à capillarité.

2. Dispositif de réception, de stockage et de distribution autorégulée de liquide vers un contenant d'utilisation selon la revendication 1, **caractérisé en ce que** l'ouverture d'évacuation (5) est disposée au maximum au même niveau que l'ouverture inférieure (4/2) du canal à air.

3. Dispositif de réception, de stockage et de distribution autorégulée de liquide vers un contenant d'utilisation selon les revendications 1 à 2, **caractérisé en ce qu'**un dispositif de filtrage supplémentaire (8) sous la forme d'un tamis est chaque fois disposé à l'ouverture de remplissage (3/1), à l'ouverture inférieure (4/2) du canal à air et à l'ouverture du trop-plein (6) disposée à l'intérieur du contenant d'utilisation (2).

4. Dispositif de réception, de stockage et de distribution autorégulée de liquide vers un contenant d'utilisation selon la revendication 1, **caractérisé en ce que** le contenant d'utilisation (2) est un réservoir ouvert d'un côté pour recevoir des plantations.

5. Dispositif de réception, de stockage et de distribution autorégulée de liquide vers un contenant d'utilisation selon la revendication 1, **caractérisé en ce que** le contenant d'utilisation (2) est un réservoir ouvert d'un côté et en même temps un réservoir accessible de l'extérieur pour recevoir du liquide.

6. Dispositif de réception, de stockage et de distribution autorégulée de liquide vers un contenant d'utilisation selon les revendications 1 à 3, **caractérisé en ce que** tout le contenant d'utilisation (2), y compris la région du fond, est réalisé comme un réservoir à double paroi, dans lequel la région formée par la double paroi est réalisée sous la forme d'un réservoir de stockage (1) et l'agencement des canaux (3, 4, 5 et 6) est effectué dans cette région du réservoir de stockage (1).

7. Dispositif de réception, de stockage et de distribution autorégulée de liquide vers un contenant d'utilisation selon les revendications 1 à 3 et 6, **caractérisé en ce qu'**une ouverture de vidange pouvant être refermée (7) est disposée sur la paroi extérieure du contenant d'utilisation à double paroi (2) et ici dans la région du fond.
